Europäisches Patentamt

European Patent Office

Office européen des brevets

(11) Publication number: **0 068 818**
**B1**

(12) **EUROPEAN PATENT SPECIFICATION**

(45) Date of publication of patent specification: **24.09.86**

(21) Application number: **82303292.5**

(22) Date of filing: **24.06.82**

(51) Int. Cl.⁴: **B 23 H 1/02**

(54) Method and apparatus for controlling an electric discharge machine.

(30) Priority: **25.06.81 JP 98702/81**

(43) Date of publication of application:
**05.01.83 Bulletin 83/01**

(45) Publication of the grant of the patent:
**24.09.86 Bulletin 86/39**

(84) Designated Contracting States:
**CH DE FR GB LI**

(56) References cited:
**FR-A-2 443 712**
**US-A-3 731 044**

(73) Proprietor: **FANUC LTD**
**3580, Shibokusa Aza-Komanba Oshino-mura**
**Minamitsuru-gun Yamanashi 401-05 (JP)**

(72) Inventor: **Matsui, Mitsuo**
**1-12-17, Higashinakano**
**Nakano-ku Tokyo (JP)**
Inventor: **Matsumura, Teruyuki**
**38-8, Matsugaya**
**Hachioji-shi Tokyo (JP)**

(74) Representative: **Billington, Lawrence Emlyn**
**et al**
**HASELTINE LAKE & CO Hazlitt House 28**
**Southampton Buildings Chancery Lane**
**London WC2A 1AT (GB)**

Courier Press, Leamington Spa, England.

## Description

The present invention relates to a method and apparatus for controlling an electric discharge machine. More particularly, it relates to a method and apparatus for controlling an electric discharge machine well-suited for application to the retraction control of an electrode.

Electric discharge machines include a wire-cut electric discharge machine wherein a wire electrode is moved relative to a workpiece along a commanded path, thereby to perform electric discharge machining, and also an electric discharge machine wherein an electrode of a predetermined shape, located near a workpiece, is moved in a cutting direction (advancing direction) and an electric discharge is caused across the electrode and the workpiece, thereby to subject the workpiece to machining in the same shape as that of the electrode.

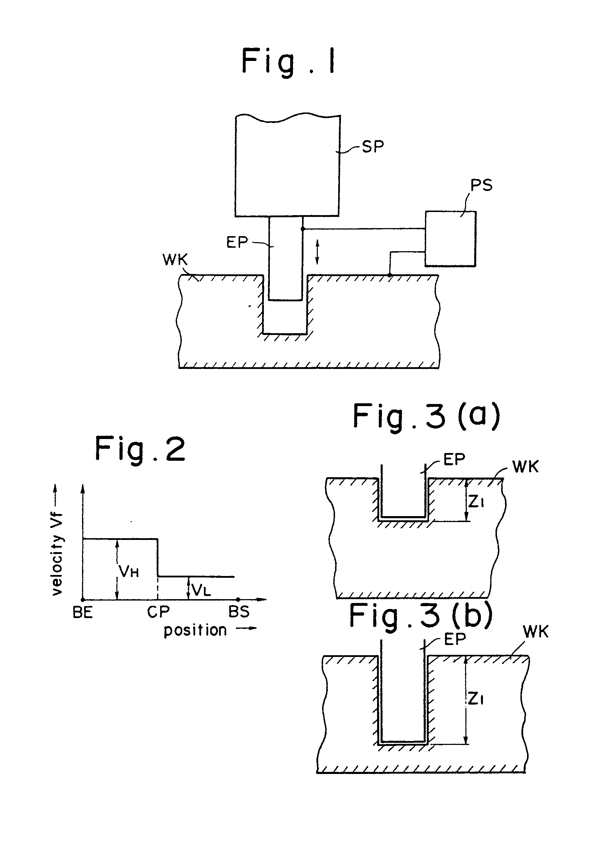

Figure 1 is a schematic explanatory view of the latter type of electric discharge machine, although the invention is applicable to the former type of machine also. An electrode EP serving as a punch is supported by a spindle SP, and is fed for machining (i.e., advanced) in the downward direction of the arrow by a servomotor, not shown. A voltage is applied by a power source PS across the electrode EP and a workpiece WK, which is to be machined into a die. Accordingly, when the electrode EP is advanced while a minute gap is maintained between the workpiece WK and the electrode EP, the workpiece WK is machined into a shape similar to that of the electrode EP. An enlarged bore of desired size can be readily machined in the workpiece WK by controlling, e.g., the energy of the machining pulses. If necessary, the machining operation is carried out while the electrode EP is being moved in eccentric fashion, whereby an enlarged bore of any desired dimensions can be machined.

In such an electric discharge machine, when the electrode has come into contact with the workpiece or when debris is to be removed, the electrode must be retracted along the machined path. To this end, all the conventional electric discharge machines have a retraction control function. Thus, FR—A—2443712 discloses a method and apparatus for controlling an electric discharge machine wherein an electric discharge is caused across an electrode and a workpiece with a voltage applied there-across and wherein relative movement between the electrode and the workpiece is controlled so as to subject the workpiece to electric discharge machining, comprising the step of reading numerical control command information from a storage medium which stores said information, the step of controlling said electrode and/or said workpiece for relative forward movement on the basis of machining control information included in said read numerical control command information, and the step of retracting the workpiece when the gap between them is reduced less than a preselected threshold.

In the conventional electric discharge machines, however, the retraction conditions such as retraction speed, retractable limit and speed for advancing the electrode again after the retraction, are set as parameters by use of a manual data input device (MID), a keyboard or the like when any machining condition has changed. Each time retraction control is required, the parameters are read to carry out the control. In this regard, the retraction conditions differ depending upon the material and shape of the workpiece, machining conditions, etc. Therfore, when the retraction speed, the retractable limit etc. are fixed at certain values, they cannot meet changes in the material and shape of the workpiece or in the machining conditions. Accordingly, it is inevitable in electric discharge machining to set the retraction conditions through the external operation of the keys, the MDI or the like each time there is a change in any of the conditions, such as the shape of the workpiece, the machining conditions, etc. Such operations are very troublesome and diminish machining efficiency.

According to a first aspect of the present invention there is provided a method of controlling an electric discharge machine wherein an electric discharge is caused across an electrode and a workpiece with a voltage applied thereacross and wherein relative movement between the electrode and the workpiece is controlled so as to subject the workpiece to electric discharge machining, comprising the step of reading numerical control information from a storage medium which stores said information, the steps of storing, in a memory, retraction control information included in the read numerical control command information, the step of controlling said electrode and/or said workpiece for relative forward movement on the basis of machining control information included in said read numerical control command information, and the step of reading the stored retraction control information from said memory in response to a retraction control command and controlling said electrode and/or said workpiece for relative backward movement on the basis of the read retraction control information.

According to a second aspect of the present invention there is provided apparatus for controlling an electric discharge machine wherein when the machine is in use an electric discharge is caused across an electrode and a workpiece with a voltage applied thereacross and wherein drive means for relatively moving the electrode and the workpiece is numerically controlled in accordance with received numerical control command information, said apparatus comprising read control means for reading the numerical control command information from a storage medium, a memory for storing therein retraction control information included in the read numerical control command information, and processing means for delivering a forward movement command to said drive means on the basis of machining control information included in said read numerical control information, to cause said drive means to bring said electrode and said workpiece into relative forward movement for electric discharge machining, and also for reading said retraction control information out of said memory in response to a retraction control command and delivering a backward movement command to said drive means on the basis of said retraction control information, to cause said drive means to bring said electrode and said workpiece in to relative backward movement.

An example and embodiment of the present invention may provide a method and apparatus for controlling an electric discharge machine, wherein it is not necessary to specially and manually enter retraction conditions for each electric discharge machining operation.

An example and embodiment of the present invention may provide a method and apparatus for controlling an electric discharge machine, wherein it is not necessary to specially enter retraction conditions other than the numerical control command information, the retraction control information being inserted into the numerical control command information which includes machining control information.

An example and embodiment of the present invention may provide a method and apparatus for controlling an electric discharge machine for improving machining efficiency.

For a better understanding of the invention and to show how it may be put into effect reference will now be made by way of example to the accompanying drawings in which:

Figure 1 is a schematic explanatory view of an electric discharge machine to which the present invention is applied;

Figure 2 and Figures 3(a) and 3(b) are diagrams for explaining cases where retraction conditions change; and

Figure 4 is a block diagram showing an embodiment of the present invention.

Hereunder, an example and embodiment of the present invention will be described in detail with reference to the drawings.

Figure 2 and Figures 3(a) and 3(b) are diagrams for explaining cases where retraction conditions change depending upon machining conditions.

Figure 2 illustrates the relationship between a speed $V_f$, at which an electrode (EP in Figure 1) is moved forward or advanced again after retraction, and the position of the electrode. In the figure, BS indicates a backward movement or retraction starting position, and BE a retraction end position. In general, in order to shorten machining time and to prevent the recurrence of a short circuit between the electrode and a workpiece, the forward speed $V_f$ is so controlled so as to move the electrode at a high speed $V_H$ up to a certain position CP and thereafter at a low speed $V_L$. The values of the speeds $V_H$ and $V_L$ and the position CP of the shift from $V_H$ to $V_L$ differ depending upon the currently prevailing machining conditions. In addition, as shown in the machining state diagrams of Figures 3(a) and 3(b), the retractable limit of the electrode EP must sometimes be changed depending upon the depth of cut $Z_1$ of the electrode. More specifically, in a case where debris is to be removed, when the depth of cut is small as shown in Figure 3(a), the debris can be removed easily even if the gap between the electrode EP and the workpiece WK is small because of a small retraction distance. In contrast, when the depth of cut is great as shown in Figure 3(b), the debris cannot be removed unless a large gap is provided by retraction over a large distance.

Moreover, it is dangerous to set a retractable limit, as in the case of the deep cut illustrated in Figure 3(b), for a case where the cut is shallow, as illustrated in Figure 3(a). The reason is as follows. Electric discharge machining takes place in a working fluid, which is oil in many cases. If, in the case of the shallow cut, the electrode can retreat the same distance as in the case of the deep cut, it might rise above the surface of the working fluid. This can pose the danger of fire.

As thus far described with reference to Figure 2 and Figures 3(a) and 3(b), unless the retraction conditions are changed depending upon the machining conditions, the desired object cannot be attained or a hazardous condition arises. Moreover, changing the retraction conditions manually is troublesome as stated before. In the present invention, therefore, the retraction conditions such as retraction speed and retractable limits are included in numerical control (NC) command information and are issued as commands.

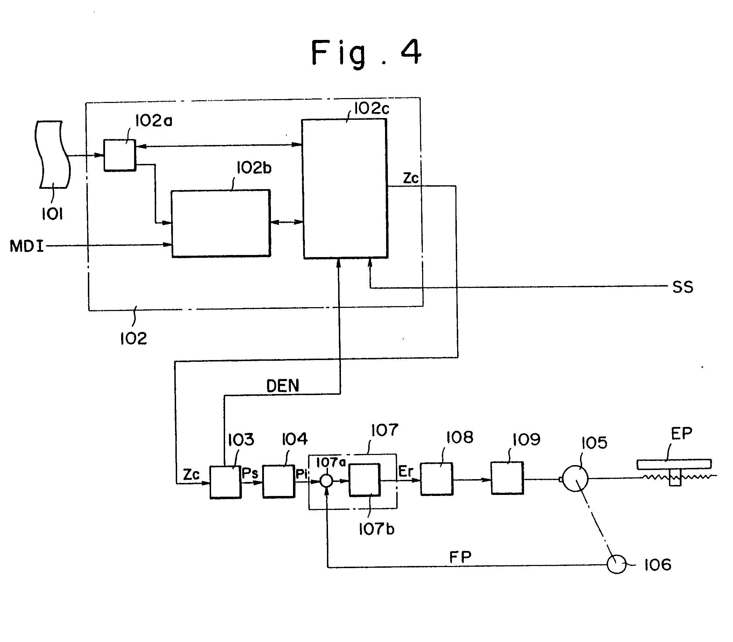

Figure 4 is a circuit block diagram of an embodiment for realizing the method of controlling an electric discharge machine according to the present invention.

Referring to the figure, numeral 101 designates a tape for numerical control (NC), namely a paper tape in which NC command information for numerically controlling an electric discharge machine is punched. The NC command information include (a) ordinary numerical information for the positional control of an electrode, namely information indicating the shape to be machined, (b) speed information indicating speeds at which machining operations are to be carried out and (c) auxiliary function instructions, etc., to be delivered to the machine side, and, in addition, (d) retraction control information indicating how the retraction control is to be made. As stated before, the retraction conditions depend upon the material and shape of the workpiece, the machining conditions, etc. Therefore, retraction speeds, retractable limits, high and low speeds for re-advancing the electrode, etc. are punched in the NC tape 101 as the retraction control information in consideration of such machining conditions, etc. Numeral 102 designates a processing unit, which comprises a read control circuit 102a, a retraction memory 102b for storing the retraction control information from among the NC command information, and a processing circuit 102c constructed of a microcomputer for executing positional control processing, retraction control processing, etc. of the electric discharge machine. The retraction control information read from the NC tape 101 is stored in the retraction memory 102b, while such items of information as the information regarding positional control of the electrode and the auxiliary function instructions are directly fed into the processing circuit 102c. The processing circuit 102c decodes the applied information, whereupon it delivers, e.g., M, S and T function instructions to the machine side through a heavy-current switchboard and a move command Zc to a pulse distributor 103 in the succeeding stage. The pulse distributor 103 executes well-known pulse distribution computations on the basis of the move command Zc, and generates distributed pulses Ps at a frequency corresponding to a commanded speed. Numeral 104 designates a known accelerator/decelerator circuit which generates a train of pulses Pi by rectilinearly accelerating the pulse rate of the train of distributed pulses Ps at the occurrence of this pulse train and rectilinearly decelerating the same at the end thereof. Numeral 105 indicates a D.C. motor by which the electrode EP is fed for machining. A pulse coder 106 generates one feedback pulse FP each time the D.C. motor 105 rotates by a predetermined amount. An error calculating and storing unit 107 is constructed of, for example, a reversible counter, and stores the difference Er between the number of input pulses Pi received from the accelerator/decelerator circuit 104 and that of the feedback pulses FP. This error calculating and storing unit may be constructed, as shown in the figure, of an arithmetic circuit 107a for calculating the difference Er between the numbers of the pulses Pi and FP, and an error register 107b for storing the error Er. More specifically, assuming that the D.C. motor 105 is rotating in the forward direction, the error calculating and storing unit 107 operates in such a manner that each time the input pulse Pi is generated, it is counted up by means of the arithmetic circuit 107a, while each time the feedback pulse FP is generated, the content is counted down, and that the difference Er between the number of the input pulses and the feedback pulses is stored in the error register 107b. Numeral 108 denotes a digital-to-analog converter for generating an analog voltage proportional to the content (digital value) of the error register 107b, and numeral 109 a speed control circuit.

The operation of the embodiment in Figure 4 will now be described.

When the information read from the NC tape 101 by the read control circuit 102a is electrode machining feed information, such as move control information in the Z-axial direction, the processing circuit 102c supplies the pulse distributor 103 with the move command Zc, on the basis of which the pulse distributor 103 executes the pulse distribution computation and provides the distributed pulses Ps. Upon receiving the distributed pulses Ps, the accelerator/decelerator circuit 104 accelerates and decelerates the pulse rate thereof and applies the train of command pulses Pi to the error calculating and storing unit 107. Thus, the content of the error register 107b becomes non-zero, so that the digital-to-analog converter 108 provides a voltage and the motor 105 is driven by the speed control circuit 109 so as to move the electrode EP. When the motor 105 has rotated by a predetermined amount, the feedback pulse FP is generated by the pulse coder 106 and is applied to the error calculating and storing unit 107. In this manner, the different Er between the number of the command pulses Pi and that of the feedback pulses FP is stored in the error register 107b. Thenceforth, the electrode EP is servo-controlled with the difference Er maintained at a constant value in a steady state until it is fed for machining to a desired position.

While the electrode EP is being fed for machining, a shorting detector, not shown, monitors the contact between the electrode EP and the workpiece WK in the form of the conduction current across them. When the electrode EP has contacted the workpiece WK, the shorting detector provides a shorting signal Ss. This shorting signal Ss is entered as a retraction control command, and the processing circuit 102c immediately starts executing retraction control processing on the basis of a retraction control program stored in a built-in program memory. That is, the processing circuit 102c reads a retractable limit, a retraction speed, high and low re-advance speeds, high and low speed-change-over positions, etc. stored in the retraction memory 102b. In addition, a backward movement command is prepared in the processing circuit 102c and fed into the pulse distributor 103 in order that the electrode EP may move at the aforementioned retraction speed along an already cut path and in the direction opposite to that of the cutting direction. As a result, the electrode EP starts its retraction at the set retraction speed. Meantime, the shorting signal Ss vanishes. Then, the backward movement is stopped, and the electrode EP is advanced at the high speed $V_H$ to the set position where the speed is changed over, and subsequently at the low speed $V_L$ to a predetermined position. Then, retraction control processing ends. After such processing, electric discharge machining is restarted on the basis of a positional command and a speed command issued before the generation of the shorting signal. Herein, in a case where the electrode EP attempts to continue retracting beyond the retractable limit (in a case where the shorting signal Ss does not vanish even when the electrode has retreated a distance set by the retractable limit), retraction is stopped, and alarm information is issued to inform the operator that the shorted state still exists.

As described above in detail, according to the present invention, retraction conditions are entered into an NC tape or the like along with machining control information for an electrode, so that even when any of the machining conditions has changed, retraction conditions need not be separately set through an MDI or a keyboard on each occasion. That is, according to the present invention, the optimum retraction information for the various machining conditions is entered in the NC tape beforehand, so that the setting operations are dispensed with and optimum retraction control performed, whereby electric discharge machining of good efficiency is ensured.

When the MDI, the keyboard or the like is additionally provided so that retraction conditions can also be set and entered therewith, retraction control can be effected even for retraction conditions which are not punched in the NC tape. It is also possible to punch retraction conditions in a plurality of desired portions of the NC tape. For example, as explained in connection with Figure 3(a) and 3(b), the retractable limit must be changed in cases where the depth of cut is not greater than a reference depth Zr and where it is greater than the same. In such cases, by way of example, a first retractable limit can be set in the beginning of the NC tape, and a second retractable limit in a suitable portion of the NC tape where the depth Zr is exceeded.

In general terms, there has been disclosed a method of controlling an electric discharge machine wherein discharge is caused across an electrode (EP) and a work-piece with a voltage applied thereacross and wherein the relative movement between the electrode (EP) and the workpiece is controlled so as to subject the workpiece to electric discharge machining, comprising the step of inserting retraction control information into numerical control command information (101) in advance and storing in memory (102b) the retraction control information included in the numerical control command information (101) after said numerical control command information (101) is read, the step of controlling the electrode (EP) and/or the workpiece for relative forward movement on the basis of machining control information included in the read numerical control command information (101), and the step of reading the stored retraction control information from the memory (102b) in response to a retraction control command and controlling the electrode (EP) and/or the workpiece for relative backward movement on the basis of the read retraction control information.

## Claims

1. A method of controlling an electric discharge machine wherein an electric discharge is caused across an electrode (EP) and a workpiece (WK) with a voltage applied thereacross and wherein relative movement between the electrode (EP) and the workpiece (WK) is controlled so as to subject the workpiece (WK) to electric discharge machining, comprising the step of reading numerical control command information from a storage medium (101) which stores said information, the steps of storing, in a memory (102b), retraction control information included in the read numerical control command information, the step of controlling said electrode (EP) and/or said workpiece (WK) for relative forward movement on the basis of machining control information included in said read numerical control command information, and the step of reading the stored retraction control information from said memory (102b) in response to a retraction control command and controlling said electrode (EP) and/or said workpiece (WK) for relative backward movement on the basis of the read retraction control information.

2. A method of controlling an electric discharge machine as defined in claim 1, comprising the step of bringing said electrode (EP) and said workpiece (WK) into relative forward movement again on the basis of said retraction control information after the backward movement step.

3. A method of controlling an electric discharge machine as defined in claim 1 or 2 wherein the backward movement step is performed in a period during which a shorting signal indicative of a shorting across said workpiece (WK) and said electrode (EP) is generated.

4. Apparatus for controlling an electric discharge machine wherein when the machine is in use an electric discharge is caused across and electrode (EP) and a workpiece (WK) with a voltage applied thereacross and wherein drive means (105) for relatively moving the electrode (EP) and the workpiece (WK) is numerically controlled in accordance with received numerical control command information, said apparatus comprising read control means (102a) for reading the numerical control command information from a storage medium (101), a memory (102b) for storing therein retraction control information included in the read numerical control command information, and processing means (102c) for delivering a forward movement command to said drive means (105) on the basis of machining control information included in said read numerical control information, to cause said drive means (105) to bring said electrode (EP) and said workpiece (WK) into relative forward movement for electric discharge machining, and also for reading said retraction control information out of said memory (102b) in response to a retraction control command and delivering a backward movement command to said drive means (105) on the basis of said retraction control information, to cause said drive means (105) to bring said electrode (EP) and said workpiece (WK) in to relative backward movement.

5. Apparatus as defined in claim 4, wherein said processing means (102c) is operable to bring said electrode (EP) and said workpiece (WK) into relative forward movement again on the basis of said retraction control information after said relative backward movement.

6. Apparatus as defined in claim 4 or 5, and comprising a shorting detector for initiating said relative backward movement in response to a shorting across said workpiece (WK) and said electrode (EP).

## Patentansprüche

1. Verfahren zur Steuerung einer Funkenerosionsmaschine,
bei dem durch Anlegen einer Spannung zwischen einer Elektrode (EP) und einem Werkstück (WK) eine elektrische Entladung zwischen diesen hervorgerufen wird,
und bei dem die Relativbewegung zwischen der Elektrode (EP) und dem Werkstück (WK) derart gesteuert wird, daß das Werkstück (WK) einer Funkenerosionsbearbeitung unterzogen wird,
mit einem Verfahrensschritt, bei dem eine in einem Speichermedium (101) gespeicherte numerische Steuerbefehlsinformation aus diesem Speichermedium (101) ausgelesen wird,
mit einem Verfahrensschritt, bei dem die in der ausgelesenen numerischen Steuerbefehlsinformation enthaltene Rückziehsteuerinformation in einem Speicher (102b) abgespeichert wird,
ferner mit einem Verfahrensschritt, bei dem die relative Vorwärtsbewegung der genannten Elektrode (EP) und/oder des genannten Werkstücks (WK) auf der Basis der in der ausgelesenen numerischen Steuerbefehlsinformation enthaltenen Bearbeitungssteuerinformation gesteuert wird,
sowie mit einem Verfahrensschritt, bei dem die gespeicherte Rückziehsteuerinformation in Abhängigkeit von einem Rückziehsteuersignal aus dem genannten Speicher (102b) ausgelesen und die relative Rückwärtsbewegung der Elektrode (EP) und/oder des Werkstücks (WK) auf der Basis der ausgelesenen Rückziehsteuerinformation gesteuert werden.

2. Verfahren zur Steuerung einer Funkenerosionsmaschine nach Anspruch 1 mit einem weiteren Verfahrensschritt, bei dem die Elektrode (EP) und das Werkstück (WK) auf der Basis der Rückziehsteuerinformation nach dem Verfahrensschritt der Rückwärtsbewegung erneut mit einer relativen Vorwärtsbewegung beaufschlagt werden.

3. Verfahren zur Steuerung einer Funkenerosionsmaschine nach Anspruch 1 oder 2, bei dem der Verfahrensschritt der Rückwärtsbewegung in einer Zeitspanne ausgeführt wird, während der ein Kurzschlußsignal erzeugt wird, das für einen Kurzschluß zwischen dem Werkstück (WK) und der Elektrode (EP) kennzeichnend ist.

4. Gerät zur Steuerung einer Funkenerosionsmaschine,
in der während des Betriebs mit Hilfe einer zwischen einer Elektrode (EP) und einem Werkstück (WK) liegenden Spannung eine elektrische Entladung zwischen diesen Teilen (EP, WK) hervorgerufen wird,
und in der eine Antriebsvorrichtung (105), die gemäß einer empfangenen numerischen Steuerbefehlsinformation numerisch gesteuert wird, die Elektrode (EP) und das Werkstück (WK) mit einer Relativbewegung beaufschlagt,
wobei das Gerät folgende Teile beinhaltet:
Lesesteuermittel (102a) zum Auslesen der numerischen Steuerbefehlsinformation aus einem Speichermedium (101),
ferner einen Speicher (102b) zur Einspeicherung einer in der ausgelesenen numerischen Steuerbefehlsinformation enthaltenen Rückziehsteuerinformation
sowie eine Prozessoreinrichtung (102c)
— zur Ausgabe eines Vorwärtsbewegungsbefehls an die Antriebsvorrichtung (105) auf der Basis der in der genannten ausgelesenen numerischen Steuerbefehlsinformation enthaltenen Maschinensteuerinformation, um die Antriebsvorrichtung (105) zu veranlassen, die Elektrode (EP) und das Werkstück (WK) zur Funkenerosionsbearbeitung mit einer relativen Vorwärtsbewegung zu beaufschlagen,
— ferner zum Auslesen der Rückziehsteuerinformation aus dem Speicher (102b) in Abhängigkeit von einem Rückziehsteuerbefehl
— sowie zur Ausgabe eines Rückwärtsbewegungsbefehls an die Antriebsvorrichtung (105) auf der Basis der Rückziehsteuerinformation, um die Antriebsvorrichtung (105) zu veranlassen, die Elektrode (EP) und das Werkstück (WK) mit einer relativen Rückwärtsbewegung zu beaufschlagen.

5. Gerät zur Steuerung einer Funkenerosionsmaschine nach Anspruch 4, bei dem die Prozessoreinrichtung (102c) derart betrieben werden kann, daß sie die Elektrode (EP) und das Werkstück (WK) nach der genannten relativen Rückwärtsbewegung auf der Basis der Rückziehsteuerinformation erneut mit einer relativen Vorwärtsbewegung beaufschlagt.

6. Gerät zur Steuerung einer Funkenerosionsmaschine nach Anspruch 4 oder 5 mit einem Kurzschlußdetektor zur Initiierung der genannten relativen Rückwärtsbewegung in Abhängigkeit von einem Kurzschluß zwischen dem Werkstück (WK) und der Elektrode (EP).

## Revendications

1. Un procédé pour la commande d'une machine à décharges électriques où une décharge électrique est créée entre une électrode (EP) et une pièce d'ouvrage (WK) avec une tension appliquée entre elles, et où un mouvement relatif entre l'électrode (EP) et la pièce d'ouvrage (WK) est commandée afin de soumettre la pièce d'ouvrage (WK) à un usinage par décharges électriques, comprenant l'opération consistant à lire l'information d'ordre de commande numérique à partir d'une mémoire (101) qui enregistre ladite information, l'opération consistant à enregistrer, dans une mémoire (102b), l'information de commande de retrait incluse dans l'information d'ordre de commande numérique qui a été lue, l'opération consistant à commander ladite électrode (EP) et/ou ladite pièce d'ouvrage (WK) en vue d'un mouvement relatif vers l'avant sur la base d'une information de commande d'usinage incluse dans ladite information d'ordre de commande numérique qui a été lue, et l'opération consistant à lire l'information de commande de retrait qui a été enregistrée à partir de ladite mémoire (102b) en réponse à un ordre de commande de retrait, et à commander ladite électrode (EP) et/ou ladite pièce d'ouvrage (WK) en vue d'un mouvement relatif vers l'arrière sur la base de l'information de commande de retrait qui a été lue.

2. Un procédé pour la commande d'une machine à décharges électriques selon la revendication 1, comprenant l'opération consistant à amener à nouveau ladite électrode (EP) et ladite pièce d'ouvrage (WK) dans un mouvement relatif vers l'avant sur la base de ladite information de commande de retrait après l'opération de mouvement vers l'arrière.

3. Un procédé pour la commande d'une machine à décharges électriques selon la revendication 1 ou 2 où l'opération de mouvement vers l'arrière est effectué dans une période au cours de laquelle est formé un signal de court-circuit indicateur d'un court-circuit entre ladite pièce d'ouvrage (WK) et ladite électrode (EP).

4. Appareil pour la commande d'une machine à décharges électriques où, lorsque la machine est utilisée, une décharge électrique est créée entre une électrode (EP) et une pièce d'ouvrage (WK) avec une tension appliquée entre elles et où des moyens d'entraînement (105) permettant de déplacer, l'une par rapport à l'autre, l'électrode (EP) et la pièce d'ouvrage (WK) sont commandés de manière numérique en accord avec une information d'ordre de commande numerique qui a été reçue, ledit appareil comprenant des moyens de commande de lecture (102a) permettant de lire, à partir d'une mémoire (101), l'information d'ordre de commande numérique, une mémoire (102b) pour y enregistrer une information de commande de retrait incluse dans l'information d'ordre de commande numérique qui a été lue, et des moyens de traitement (102c) permettant de fournir un ordre de mouvement vers l'avant pour lesdits moyens d'entraînement (105) sur la base d'une information de commande d'usinage incluse dans ladite information de commande numérique qui a été lue, afin d'amener lesdits moyens d'entraînement (105) à mettre ladite électrode (EP) et ladite pièce d'ouvrage (WK) en mouvement relatif vers l'avant en vue d'un usinage par décharges électriques, et également pour lire, de la mémoire (102b), ladite information de commande de retrait en réponse à un ordre de commande de retrait et à fournir un ordre de mouvement vers l'arrière pour lesdits moyens d'entraînement (105) sur la base de ladite information de commande de retrait, afin d'amener lesdits moyens d'entraînement (105) à mettre ladite électrode (EP) et ladite pièce d'ouvrage (WK) en mouvement relatif vers l'arrière.

5. Appareil selon la revendication 4, où lesdits moyens de traitement (102c) peuvent fonctionner pour amener à nouveau ladite électrode (EP) et ladite pièce d'ouvrage (WK) dans un mouvement relatif vers l'avant sur la base de l'information de commande de retrait après ledit mouvement relatif vers l'arrière.

6. Appareil selon la revendication 4 ou 5, et comprenant un détecteur de court-circuit pour amorcer ledit mouvement relatif vers l'arrière en réponse à un court-circuit entre ladite pièce d'ouvrage (WK) et ladite électrode (EP).

# Fig. 1

# Fig. 2

# Fig. 3 (a)

# Fig. 3 (b)

# Fig. 4